# EUROPÄISCHE PATENTSCHRIFT

(11) **EP 2 090 876 B1**
(45) Veröffentlichungstag und Bekanntmachung des Hinweises auf die Patenterteilung: **03.08.2011**
(21) Anmeldenummer: 09001802.9
(22) Anmeldetag: 10.02.2009
(51) Int. Cl.: G01M 99/00, B65G 33/00

(54) **Drehmoment-Prüfvorrichtung für einen Aufhängehaken eines Kleiderbügels**
Torque testing device for a suspension hook of a clothes hanger
Dispositif d'essai d'un crochet de suspension d'un cintre pour vêtements par application de couple

(30) Priorität: 13.02.2008 DE 102008008992
(43) Veröffentlichungstag der Anmeldung: 19.08.2009
(73) Patentinhaber: Coronet Kleiderbügel & Logistik GmbH, 64689 Grasellenbach (DE)
(72) Erfinder: Deckers, Hans, 64646 Heppenheim (DE)
(74) Vertreter: Lasch, Hartmut

(56) Entgegenhaltungen:
- EP-A1- 1 086 639
- DE-A1- 4 205 456
- DE-U1- 29 614 237
- DE-U1- 29 813 739
- US-A1- 2006 162 285

## Beschreibung

Die Erfindung betrifft eine Drehmoment-Prüfvorrichtung für einen Aufhängehaken eines Kleiderbügels.

Ein aus Kunststoff bestehender Kleiderbügel üblichen Aufbaus besitzt einen Bügelkörper, der in seinem mittleren Bereich auf seiner Oberseite einen nach oben hervorstehenden Aufhängehaken trägt und der zwei sich zu entgegengesetzten Seiten des Aufhängehakens erstreckende Bügelarme aufweist. Der Aufhängehaken besteht aus Metall und ist an seinem unteren Ende in das Kunststoff-Material des Bügelkörpers eingebettet.

In der Bekleidungsindustrie werden die Kleidungsstücke üblicherweise bereits unmittelbar nach ihrer Herstellung auf einen Kleiderbügel aufgebügelt und zusammen mit diesem zum Großhändler, Zwischenhändler und anschließend zum Einzelhändler transportiert. Dabei durchlaufen die Kleidungsstücke zusammen mit dem Kleiderbügel in der Regel vollautomatische Förder- und Sortieranlagen. Um den kontinuierlichen, ordnungsgemäßen Betrieb entsprechender Förder- und Sortieranlagen sicherzustellen, muss gewährleistet sein, dass der Aufhängehaken sich relativ zu dem Bügelkörper nicht dreht oder zumindest ein Drehmoment ausreichender Größe aufnehmen kann. Dies wird bei Kleiderbügeln mit einem aus Kunststoff bestehenden Bügelkörper und einem metallenen Aufhängehaken üblicherweise dadurch erreicht, dass das untere Ende des Aufhängehakens drehfest in dem Kunststoff-Material des Bügelkörpers festgelegt wird. Auf diese Weise lässt sich sicherstellen, dass bei einem neu hergestellten Kleiderbügel des genannten Aufbaus beim Durchlaufen der Sortier- und Förderanlagen keine Relativdrehung zwischen dem Aufhängehaken und dem Bügelkörper auftritt.

Seit einiger Zeit ist man bemüht, Kunststoff-Kleiderbügel mehrfach zu verwenden. Zu diesem Zweck werden die Kunststoff-Kleiderbügel, die nach dem Verkauf des Kleidungsstückes beim Einzelhändler übrig bleiben, wieder eingesammelt, auf eventuelle Beschädigungen überprüft und anschließend zum Hersteller der Kleidungsstücke gebracht und von diesem wiederverwendet. Es hat sich jedoch gezeigt, dass insbesondere die Endverbraucher beim Einzelhandel die drehfeste Halterung des Aufhängehakens im Bügelkörper zerstören, um ein auf dem Kleiderbügel hängendes Kleidungsstück quer zur bisherigen Ausrichtung aufhängen und dadurch besser betrachten zu können. Darüber hinaus kann es vorkommen, dass sich die Einspannung des unteren Endes des Aufhängehakens in dem Kunststoff-Material des Bügelkörpers auf dem Transport etwas verringert hat, so dass die Aufbringung eines bereits relativ geringen Drehmomentes ausreicht, um die Halterung zwischen dem Aufhängehaken und dem Bügelkörper zu lösen, so dass der Aufhängehaken drehbar wird, womit beim Transport in den Sortier- und Förderanlagen die vorgenannten Probleme verbunden sind.

Die gebrauchten Kleiderbügel werden üblicherweise nicht darauf untersucht, ob der Aufhängehaken noch mit einer ausreichenden Festigkeit in den Bügelkörper eingespannt ist und somit ein ausreichend großes Drehmoment aufnehmen kann. Wenn die gebrauchten Kleiderbügel manuell sortiert werden, um sie hinsichtlich ihrer Form, Größe, Bauart, Materialien etc. zu unterscheiden, nehmen die Sortierpersonen jeden Kleiderbügel in die Hand und drehen dabei manchmal auch am Aufhängehaken um festzustellen, ob dieser übermäßig locker sitzt. Eine definierte Prüfung des Drehmoments, das vom Aufhängehaken an seiner unteren Einspannung im Bügelkörper aufnehmbar ist, ist auf diese Weise jedoch nicht gegeben. Aus diesem Grunde häufen sich die Betriebsstörungen in automatischen Sortier- und Förderanlagen der Bekleidungsindustrie, sobald Kleidungsstücke auf gebrauchten Kleiderbügeln die Anlagen durchlaufen.

Aus den Druckschriften DE 298 13 739 U1, DE 296 14237U1 und EP 1 086 639 A1 sind Kleiderbügel bekannt, deren Aufnängehaken in verschiedenen stellungen einrasten.

Der Erfindung liegt die Aufgabe zugrunde, eine Drehmoment-Prüfvorrichtung für einen Aufhängehaken eines Kleiderbügels zu schaffen, mit der zuverlässig festgestellt werden kann, ob ein Kleiderbügel für den Einsatz in Sortier- und Förderanlagen geeignet ist.

Diese Aufgabe wird erfindungsgemäß mit einer Drehmoment-Prüfvorrichtung mit den Merkmalen des Anspruchs 1 gelöst. Dabei ist vorgesehen, dass die Drehmoment-Prüfvorrichtung eine Prüfstation erfasst, der eine Haltevorrichtung zugeordnet ist, mittels der der Kleiderbügel fest gehalten und fixiert werden kann. Darüber hinaus ist der Prüfstation ein Prüfkopf zugeordnet, mit dem auf die Verbindung zwischen dem Aufhängehaken und einem Bügelkörper des Kleiderbügels in zumindest einer Drehrichtung und vorzugsweise in beide

Drehrichtungen ein Drehmoment vorbestimmter Größe aufgebracht werden kann. Wenn sich der Aufhängehaken infolge des vorgegebenen Drehmomentes von beispielsweise 0,6Nm relativ zum Bügelkörper dreht, ist dieser Kleiderbügel für die weitere Verwendung in automatischen Sortier- und Förderanlagen nicht geeignet und wird als sogenannter "Schlechtbügel" ausgesondert oder einer zusätzlichen Aufarbeitung zugeführt, bei der der Aufhängehaken nachträglich wieder drehfest fixiert wird. Wenn die Verbindung zwischen dem Bügelkörper und dem Aufhängehaken das Drehmoment aufnehmen kann, kann der Kleiderbügel weiterhin verwendet werden und wird als sogenannter "Gutbügel" eingestuft.

Mit der Haltevorrichtung wird der Kleiderbügel insbesondere an seinem Bügelkörper in der Prüfstation festgehalten. Der Prüfkopf wird mit dem Aufhängehaken in Anlage gebracht und anschließend wird von dem Prüfkopf auf den Aufhängehaken das vorbestimmte Drehmoment aufgebracht. Die infolge des aufgebrachten Drehmoments erfolgte Bewegung des Aufhängehakens relativ zu dem Bügelkörper wird erfasst und in einer Auswerte-Einheit wird der aktuell überprüfte Kleiderbügel entweder als "Schlecht-bügel" oder als "Gutbügel" klassifiziert. Nur die als "Gutbügel" klassifizierten Kleiderbügel werden einer weitere Verwendung zugeführt, während die "Schlechtbügel" aussortiert und vorzugsweise zerkleinert bzw. geschreddert werden, was auch unmittelbar nach Durchlaufen der Drehmoment-Prüfvorrichtung erfolgen kann.

Wenn die Drehmoment-Prüfvorrichtung in eine Förder- und Sortieranlage integriert oder unmittelbar vor dieser positioniert wird, ist es möglich, die Drehfestigkeit des Aufhängehakens eines Kleiderbügels unmittelbar vor oder sogar innerhalb der Förder- und Sortieranlage zu überprüfen, wodurch zuverlässig ausgeschlossen ist, dass Kleiderbügel mit einem drehbaren Aufhängehaken die Förder- und Sortieranlage durchlaufen.

Bei der Drehmoment-Prüfvorrichtung wird auf die Verbindung zwischen dem Bügelkörper und dem Aufhängehaken des Kleiderbügels ein Drehmoment aufgebracht. Dies kann einerseits dadurch geschehen, dass der Bügelkörper des Kleiderbügels fixiert und das Drehmoment unmittelbar auf den Aufhängehaken aufgebracht wird. In kinematischer Umkehr ist es jedoch auch möglich, den Aufhängehaken zu fixieren und das Drehmoment auf den Bügelkörper aufzubringen, wobei jeweils überprüft wird, ob zwischen dem Bügelkörper und dem Aufhängehaken eine übermäßig große relative Drehung auftritt.

In bevorzugter Ausgestaltung der Erfindung ist eine Fördervorrichtung vorgesehen, mittels der der Kleiderbügel der Prüfstation zuführbar ist. Bei der Fördervorrichtung kann es sich beispielsweise um eine Transport-Spindel oder -Schnecke handeln, die drehangetrieben ist und auf der eine Vielzahl von Kleiderbügeln jeweils mit ihrem Aufhängehaken hintereinander aufgehängt sind. Infolge der Drehung der Transport-Spindel werden die Aufhängehaken und damit der Kleiderbügel längs der Transport-Spindel vorgeschoben und auf diese Weise der Prüfstation zugeführt. Die der Prüfstation zugeführten Kleiderbügel können dabei unterschiedliche Bauart, unterschiedliche Größe und unterschiedliche Gestaltung aufweisen, da sich mit der Drehmoment-Prüfvorrichtung praktisch alle Kleiderbügel-Typen überprüfen lassen, bei denen ein vorzugsweise metallener Aufhängehaken in einem vorzugsweise aus Kunststoff bestehenden Bügelkörper sitzt.

Üblicherweise befinden sich die Kleiderbügel in diskontinuierlicher Folge auf der Fördervorrichtung. Um zu verhindern, dass durch zwei sehr eng aufeinanderfolgende Kleiderbügel die Bestimmung der Drehfestigkeit des Aufhängehakens des vorlaufenden Kleiderbügels in der Prüfstation beeinträchtigt wird, kann in Weiterbildung der Erfindung vorgesehen sein, dass der Prüfstation eine Vereinzelungsstation zur Vereinzelung der der Prüfstation zugeführten Kleiderbügel vorgelagert ist. Die Vereinzelungsstation stellt sicher, dass immer nur ein Kleiderbügel in die Prüfstation eintritt und dass der nachfolgende Kleiderbügel einen ausreichenden Abstand einhält. Bei der Vereinzelungsstation kann es sich beispielsweise um einen Anschlag handeln, der in den Transportweg der Kleiderbügel längs der Fördervorrichtung eingefahren und aus diesem zurückgezogen werden kann. Vorzugsweise ist der Anschlag so positioniert, dass die Kleiderbügel sich mit ihrem unteren, vertikalen Abschnitt des Aufhängehakens an den Anschlag anlegen.

In bevorzugter Ausgestaltung der Erfindung ist vorgesehen, dass der Vereinzelungsstation eine Vor-Vereinzelungsstation vorgeschaltet ist. Auch die Vor-Vereinzelungsstation umfasst vorzugsweise einen Anschlag, der in den Transportweg der Kleiderbügel längs der Fördervorrichtung eingefahren und aus diesem zurückgezogen werden kann. Die Vor-Vereinzelungsstation hat den Sinn zu verhindern, dass sich in der Vereinzelungsstation ein übermäßiger Stau an Kleiderbügeln aufbaut und der dadurch entstehende Staudruck die Funktion der Prüfvorrichtung beeinträchtigt.

Um den zu überprüfenden Kleiderbügel ordnungsgemäß in der Prüfstation zu positionieren, kann in bevorzugter Ausgestaltung der Erfindung in der Prüfstation ein Hakenanschlag vorgesehen sein, mit dem der Aufhängehaken des zugeführten Kleiderbügels in Anlage gebracht wird bzw. auf diesen aufläuft. Der Hakenanschlag befindet sich vorzugsweise am Ende der Fördervorrichtung.

In einer möglichen Ausgestaltung der Erfindung kann vorgesehen sein, dass in den Hakenanschlag zumindest ein Magnet integriert ist, mit dem der Aufhängehaken des Kleiderbügels in Anlage bringbar ist. Sobald der Kleiderbügel mit seinem metallenen Aufhängehaken in die Nähe des Magneten kommt, zieht dieser den Aufhängehaken an, so dass der Kleiderbügel sich in engem Kontakt mit dem Hakenanschlag befindet und vorzugsweise vollflächig an diesem aufliegt. Der Magnet stellt sicher, dass zwischen dem Hakenanschlag und dem Aufhängehaken kein Zwischenraum unbestimmter Abmessung vorhanden ist. Um eine Schrägstellung des Bügels um seine vom unteren Abschnitt des Aufhängehakens definierte vertikale Mittelachse zu vermeiden, sollten zumindest zwei voneinander beabstandete Magnete vorgesehen sein. Die Magnete sind senkrecht zur Längserstreckung der Fördervorrichtung und oberhalb von dieser in Querrichtung voneinander beabstandet und treten mit unterschiedlichen Bereichen des oberen, gekrümmten Abschnitts des Aufhängehakens in Anlage. Dies stellt sicher, dass der Aufhängehaken in gewünschter Ausrichtung am Hakenanschlag anliegt.

Um den eigentlichen Prüfvorgang für das Drehmoment zu beginnen, muss zunächst festgestellt werden, dass ein Kleiderbügel in der Prüfstation vorhanden ist. Vorzugsweise sollte darüber hinaus festgestellt werden, dass der zu überprüfende Kleiderbügel in der Prüfstation richtig positioniert ist. Für die erst genannte Anforderung kann erfindungsgemäß vorgesehen sein, dass dem Hakenanschlag eine Sensorvorrichtung zugeordnet ist, mittels der das Vorhandensein eines Kleiderbügels erfasst werden kann. Diese Sensorvorrichtung kann in einer möglichen Ausgestaltung der Erfindung zumindest zwei Kontakte eines Stromkreises umfassen. Wenn der Kleiderbügel sich mit seinem metallenen Aufhängehaken an dem Hakenanschlag und somit den Kontakten anlegt, wird der Stromkreis geschlossen, was erfasst wird und als Signal für das Vorhandensein eines Kleiderbügels dienen kann. Diese Ausgestaltung bringt den wesentlichen Vorteil mit sich, dass durch das Schließen des Stromkreises infolge der Anlage des Aufhängehakens des Kleiderbügels an den Kontakten nicht nur das Vorhandensein des Kleiderbügels in der Prüfstation, sondern auch dessen korrekte Positionierung in der Prüfstation erfasst werden kann.

Die Kontakte können unabhängig oder zusätzlich zu den Magneten vorgesehen sein, in bevorzugter Ausgestaltung der Erfindung ist jedoch vorgesehen, dass die Kontakte in die Magnete integriert sind.

Nachdem der Kleiderbügel in der Prüfstation angekommen und korrekt positioniert ist, wird vorzugsweise der Aufhängehaken mit dem Prüfkopf in Eingriff gebracht. Bei dem Prüfkopf kann es sich um eine Prüfklammer handeln, zwischen deren Klammerschenkeln oder Klemmbacken der Aufhängehaken oder der Bügelkörper einspannbar ist. Die Prüfklammer ist mit einem Drehantrieb und vorzugsweise einem bidirektionalen Drehantrieb verbunden, so dass in einem Arbeitsschritt das vorbestimmte Drehmoment in beide Drehrichtungen des Aufhängehakens aufgebracht werden kann. Dabei sollte das vorbestimmte Drehmoment von einem Benutzer stufenlos einstellbar sein.

Der Drehantrieb kann elektrisch betrieben sein. Alternativ ist es auch möglich, einen pneumatischen oder hydraulischen Drehantrieb zu verwenden.

Die Haltevorrichtung, mittels der der Kleiderbügel in der Prüfstation festgehalten wird, kann ebenfalls zumindest eine Halteklammer umfassen, zwischen deren Halteschenkeln der Kleiderbügel einspannbar ist. Der Kleiderbügel wird mittels der Haltevorrichtung vorzugsweise abseits der Aufhängehakens und vorzugsweise an seinem Bügelkörper ergriffen.

In bevorzugter Ausgestaltung der Erfindung sind zumindest zwei Halteklammern vorgesehen, die mit dem Bügelkörper des Kleiderbügels auf entgegengesetzten Enden des Aufhängehakens, beispielsweise in den mittleren Bereichen oder in den äußeren Endbereichen des Bügelkörpers in Eingriff bringbar sind.

Wenn sich der Aufhängehaken relativ zu dem Bügelkörper aufgrund des von dem Prüfkopf aufgebrachten Drehmomentes in keine der beiden überprüften Drehrichtungen verdreht, wird der Kleiderbügel von der Auswerte-Einheit als "Gutbügel" klassifiziert und vorzugsweise auf eine weiterführende Transportvorrichtung gesetzt, die zu einer Verpackungsstation oder einer anderen Behandlungsstation führt.

Wenn der Aufhängehaken sich aufgrund des aufgebrachten Drehmomentes relativ zum Bügelkörper in zumindest eine Drehrichtung übermäßig verdrehen lässt, wird der Kleiderbügel von der Auswerte-Einheit als "Schlechtbügel" klassifiziert, was dazu führt, dass der Kleiderbügel nach Verlassen der Prüfstation entweder aussortiert oder einer zusätzlichen Aufarbeitung zugeführt, bei der der Aufhängehaken nachträglich wieder drehfest fixiert wird, oder sogleich vernichtet bzw. geschreddert wird. Im letztgenannten Fall ist der Vorteil gegeben, dass nach der Überprüfung nur noch "Gutbügel" existieren, d.h. Kleiderbügel, deren Aufhängehaken ausreichend fest ist, so dass auch spätere Verwechslungen nicht mehr auftreten können.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: Eine schematische Seitenansicht einer erfin- dungsgemäßen Drehmoment-Prüfvorrichtung vor Beginn des Prüfvorganges,
- Fig. 2: die Prüfvorrichtung gemäß Figur 1 nach Er- greifen des Aufhängehakens,
- Fig. 3: die Prüfvorrichtung gemäß Figur 2 nach Ver- fahren des Hakenanschlags,
- Fig. 4: die Prüfvorrichtung gemäß Figur 3 nach Ver fahren der Prüfstation
- Fig. 5: die Prüfvorrichtung gemäß Figur 4 kurz vor dem Prüfvorgang,
- Fig. 6: die Prüfvorrichtung gemäß Figur 5 während des Prüfvorganges,
- Fig. 7: die Prüfvorrichtung gemäß Figur 6 bei Über- gabe des Kleiderbügels an die weiterführende Transportvorrichtung,
- Fig. 8: die Prüfvorrichtung gemäß Figur 7 nach Über- gabe des Kleiderbügel,
- Fig. 9: einen Kleiderbügel mit geöffneter Haltevor- richtung in Seitenansicht,
- Fig. 10: den Kleiderbügel gemäß Figur 9 bei geschlos- sener Haltevorrichtung,
- Fig. 11: einen in der Prüfstation befindlichen Klei- derbügel in Aufsicht und
- Fig. 12: eine vergrößerte Ansicht des am Haken- anschlag anliegenden Aufhängehakens.

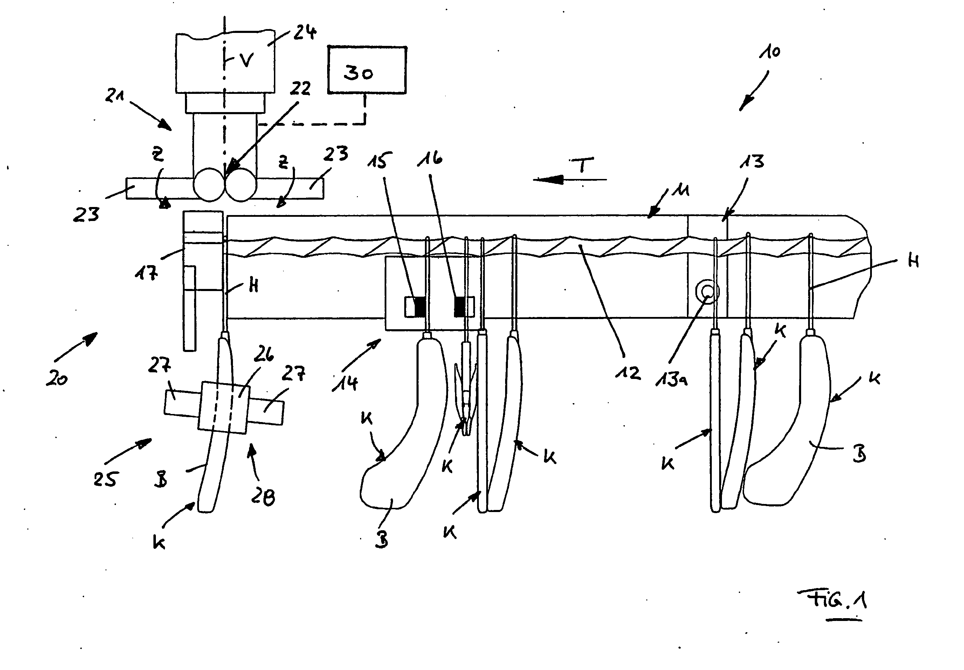

Figur 1 zeigt eine schematische Seitenansicht einer erfindungsgemäßen Drehmoment-Prüfvorrichtung 10 für einen Aufhängehaken H eines Kleiderbügels K. Die Prüfvorrichtung 10 weist eine Fördervorrichtung 11 in Form einer drehangetriebenen, stabförmigen Transport-Spindel 12 auf, die im wesentlichen horizontal ausgerichtet ist und auf die in diskontinuierlicher Folge eine Vielzahl von Kleiderbügeln K unterschiedlicher Bauart aufgehängt sind, wie es in Figur 1 angedeutet ist. Durch Drehung der Transport-Spindel 12 können die Kleiderbügel K in Transportrichtung T, d.h. gemäß Figur 1 von rechts nach links in hängender Ausrichtung transportiert werden.

Am Ende der Fördervorrichtung 11 ist eine Prüfstation 20 angeordnet, die einen Hakenanschlag 17 aufweist, gegen den der zu überprüfende Kleiderbügel K mit seinem Aufhängehaken H aufläuft. Vor dem Hakenanschlag 17, d.h. stromauf der Prüfvorrichtung 20 ist eine Vereinzelungsstation 14 zur Vereinzelung der der Prüfstation 20 zugeführten Kleiderbügel K vorgesehen. Die Vereinzelungsstation 14 umfasst zwei bolzenartige Anschläge 15 und 16, die quer zur Transportrichtung T in den Transportweg der Kleiderbügel K im Bereich der unteren Enden des jeweiligen Aufhängehakens H ausgefahren und aus dem Transportweg zurückgezogen werden können.

In Transportrichtung T vor der Vereinzelungsstation 14, d.h. stromauf der Vereinzelungsstation 14 ist eine Vor-Vereinzelungsstation 13 vorgesehen, die einen weiteren verstellbaren Anschlagbolzen 13a aufweist, der wahlweise in den Transportweg der Kleiderbügel K einbringbar und aus diesem zurückziehbar ist.

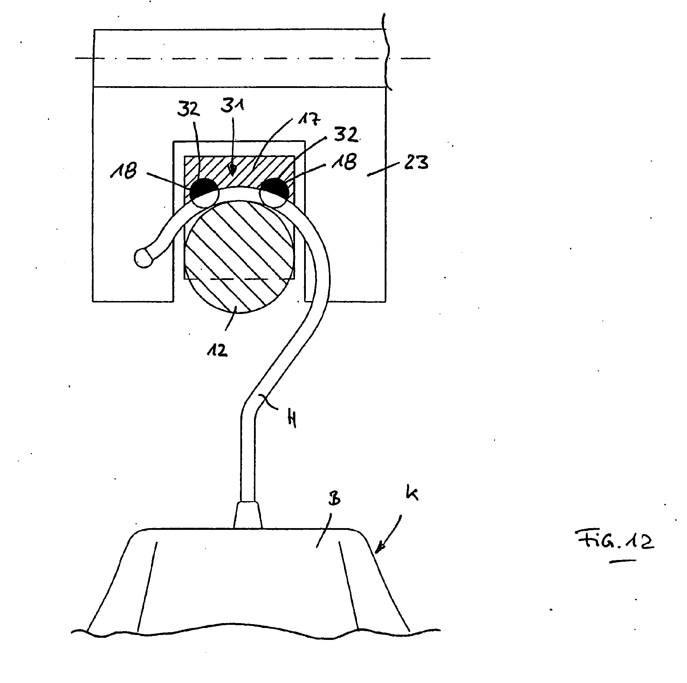

Wie Figur 12 zeigt, legt sich der Aufhängehaken H des Kleiderbügels K mit seinem oberen gekrümmten Abschnitt an den Hakenanschlag 17 an, während er noch auf die Transport-Spindel 12 der Fördervorrichtung 11 aufgehängt ist. In den Hakenanschlag 17 ist eine Sensorvorrichtung 31 integriert, die das Vorhandensein eines Kleiderbügels K und dessen richtige Positionierung erfasst. Die Sensorvorrichtung 31 weist zwei in Querrichtung zur Transportrichtung T beabstandete, seitlich nebeneinander angeordnete Magnete 18 auf, die mit dem oberen gekrümmten Abschnitt des Aufhängehakens H des Kleiderbügels K in Anlage treten und diesen anziehen. Zusätzlich ist in jeden Magnet 18 ein Kontakt 32 eines Stromkreises integriert. Sobald der metallene Aufhängehaken H an den Magneten 18 und somit den Kontakten 32 anliegt, ist der Stromkreis geschlossen, was in nicht dargestellter Weise erfasst wird. Auf diese Weise ist sichergestellt, dass bei Schließen des Stromkreises sowohl ein Kleiderbügel K vorhanden als auch korrekt positioniert ist.

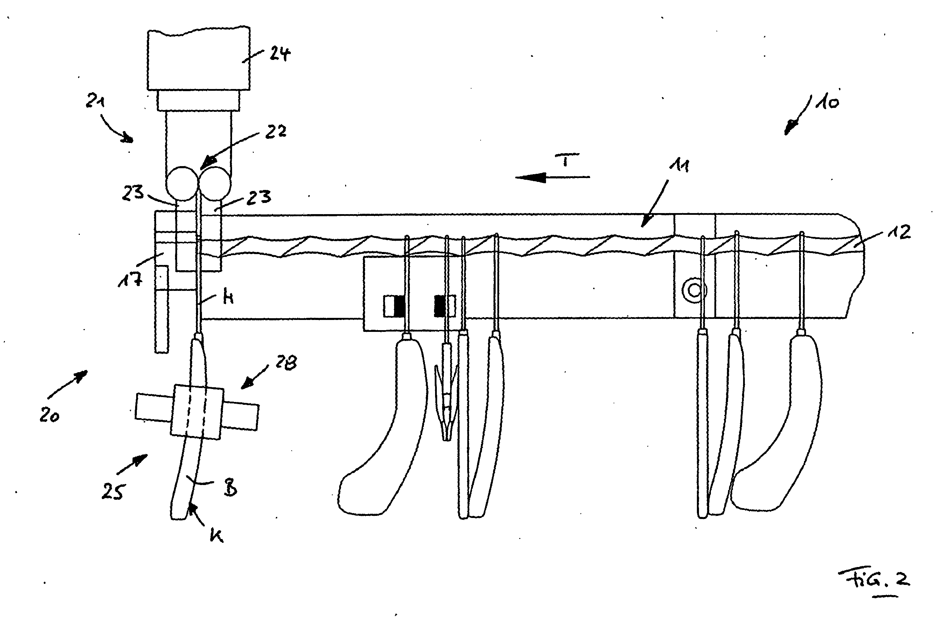

Oberhalb des Hakenanschlags 17 ist in der Prüfstation 20 ein Prüfkopf 21 angeordnet, der eine Prüfklammer 22 mit zwei relativ zueinander schwenkbaren Klammerschenkeln 23 aufweist, wie es durch die Pfeile Z in Figur 1 angedeutet ist. Die Klammerschenkel 23 können den Aufhängehaken H, der am Hakenanschlag 17 anliegt, zwischen sich einspannen (siehe Figur 2), wobei der Hakenanschlag 17 von den Klammerschenkeln 23 umgriffen wird und somit der Aufhängehaken H zunächst in seiner am Hakenanschlag 17 anliegenden, von den Magneten 18 gehaltenen Position verbleibt.

Der Prüfkopf 21 weist desweiteren einen bidirektionalen Drehantrieb 24 auf, mittels dessen die Prüfklammer 22 um eine Vertikalachse V in beide Drehrichtungen drehbar ist. Mittels des Drehantriebs 24 kann über die Prüfklammer 22 auf den Aufhängehaken H ein vorbestimmtes Drehmoment aufgebracht werden, wobei die sich daraus ergebenden Bewegungen über eine nur schematisch dargestellt Auswerte-Einheit 30 erfasst und ausgewertet werden.

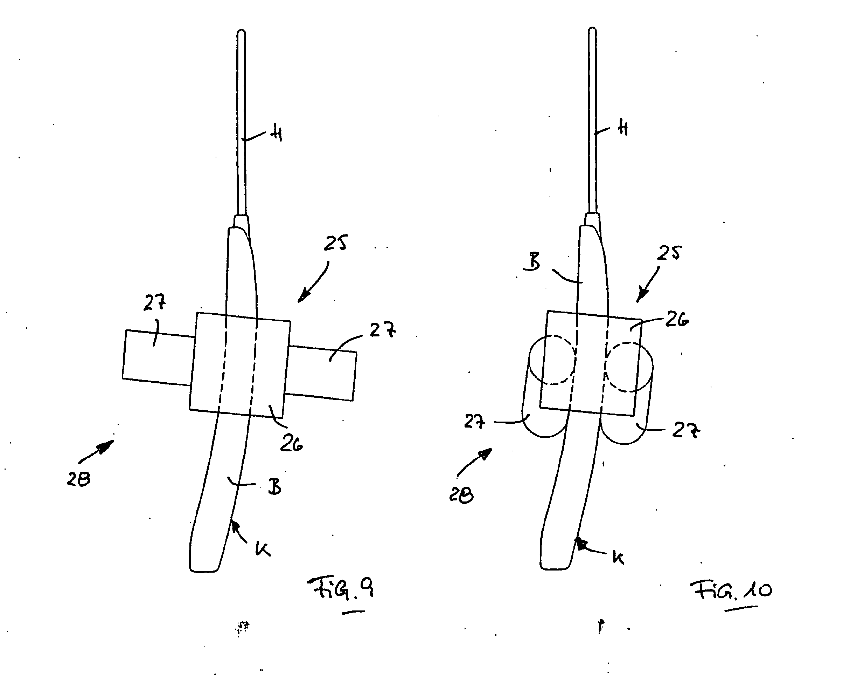

Unterhalb des Hakenanschlags 17 ist in der Prüfstation 20 eine Haltevorrichtung 25 angeordnet, die zwei Halteklammern 28 aufweist, die jeweils ein Basisteil 26 und zwei daran schwenkbar gelagerte Halteschenkel 27 umfasst. Jede Halteklammer 28 kann mit einem Bügelkörper B des Kleiderbügels K auf entgegengesetzten Seiten des Aufhängehakens in Eingriff treten und den Kleiderbügel K somit fixieren (siehe Figuren 9, 10 und 11).

Im Folgenden wird die Überprüfung des Drehmomentes eines Aufhängehakens H eines Kleiderbügels K mittels der erfindungsgemäßen Drehmoment-Prüfvorrichtung 10 im Einzelnen erläutert. Der Kleiderbügel K wird mittels der Fördervorrichtung 11 der Prüfstation 20 zugeführt und legt sich mit seinem Aufhängehaken H an den Hakenanschlag 17 an und wird dort durch die Magnete 18 in vorbestimmter Position gehalten. Die Vereinzelungsstation 14 und die Vor-Vereinzelungsstation 13 verhindern, dass nachfolgende Kleiderbügel die Überprüfung stören. Die Prüfklammer 22 des Prüfkopfs 21 befindet sich noch in der geöffneten Position und auch die Halteklammern 28 der Haltevorrichtung 25 sind noch geöffnet. Dieser Zustand ist in Figur 1 dargestellt.

Anschließend wird die Prüfklammer 22 geschlossen, so dass die Klammerschenkel 23 den Aufhängehaken H zwischen sich einspannen. Dieser Zustand ist in Figur 2 dargestellt. Dabei liegt der Aufhängehaken H zunächst noch an den Magneten 18 des Hakenanschlags 17 an.

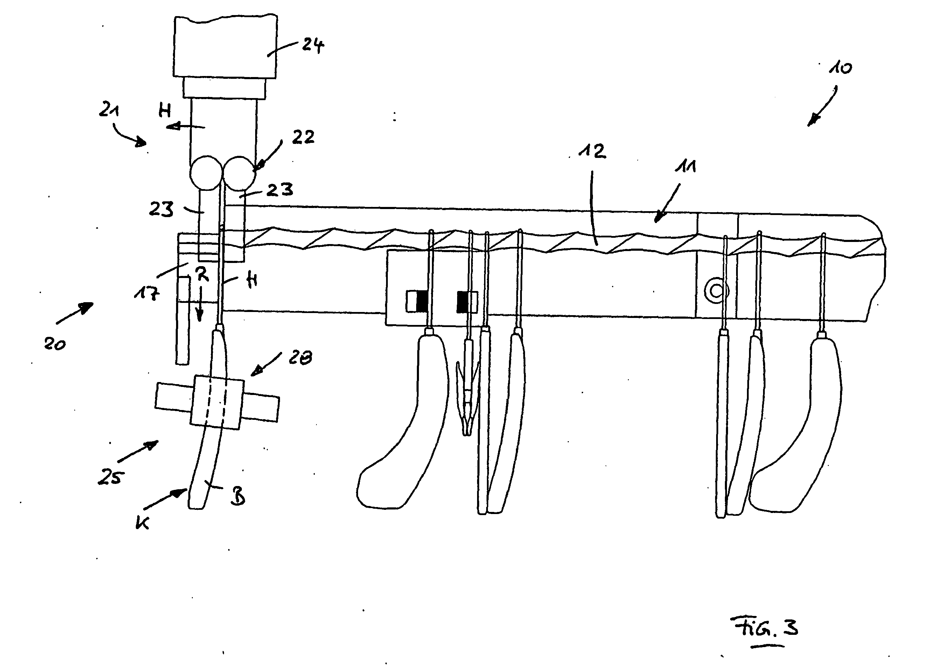

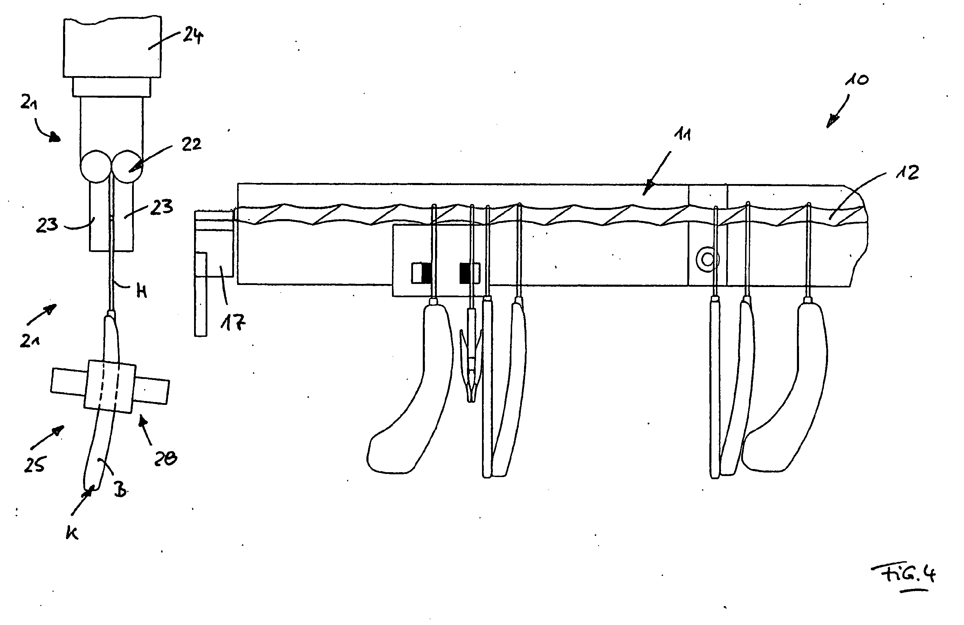

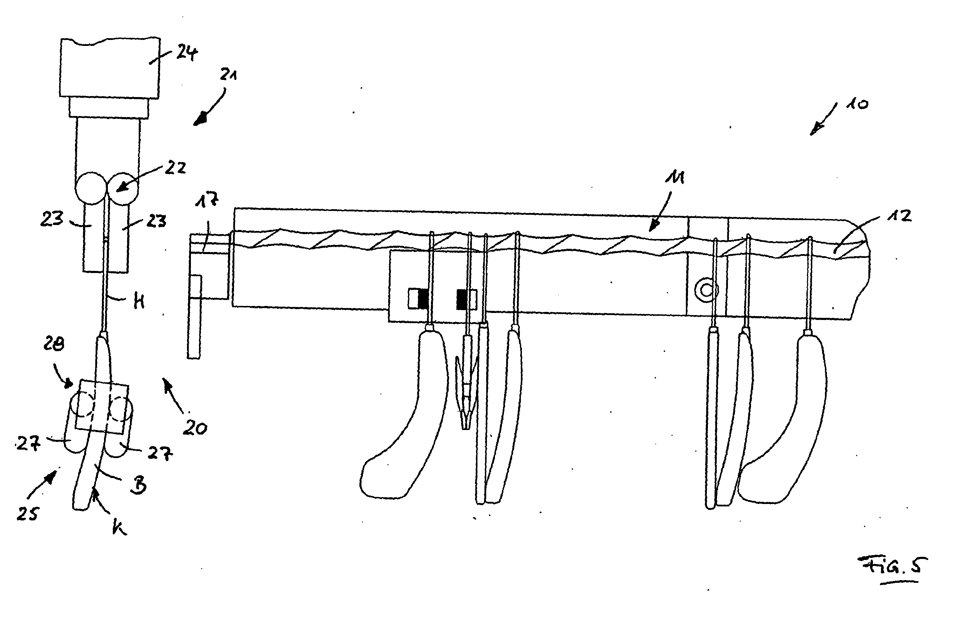

Nachdem der Kleiderbügel K nunmehr durch die Prüfklammer 22 fixiert ist, wird der Hakenanschlag 17 nach unten verschoben (siehe Pfeil R in Figur 3), so dass die Prüfstation 20 in Transportrichtung T seitlich verfahren werden kann (siehe Pfeil H in Figur 3) und den Kleiderbügel K über den abgesenkten Hakenanschlag 17 hinwegführt, so dass der Kleiderbügel K von dem Hakenanschlag 17 vollständig frei kommt, wie es in Figur 4 dargestellt ist. Dann werden auch die Halteklammern 28 der Haltevorrichtung 25 geschlossen und erfassen den Bügelkörper B des Kleiderbügels K (s. Figur 5).

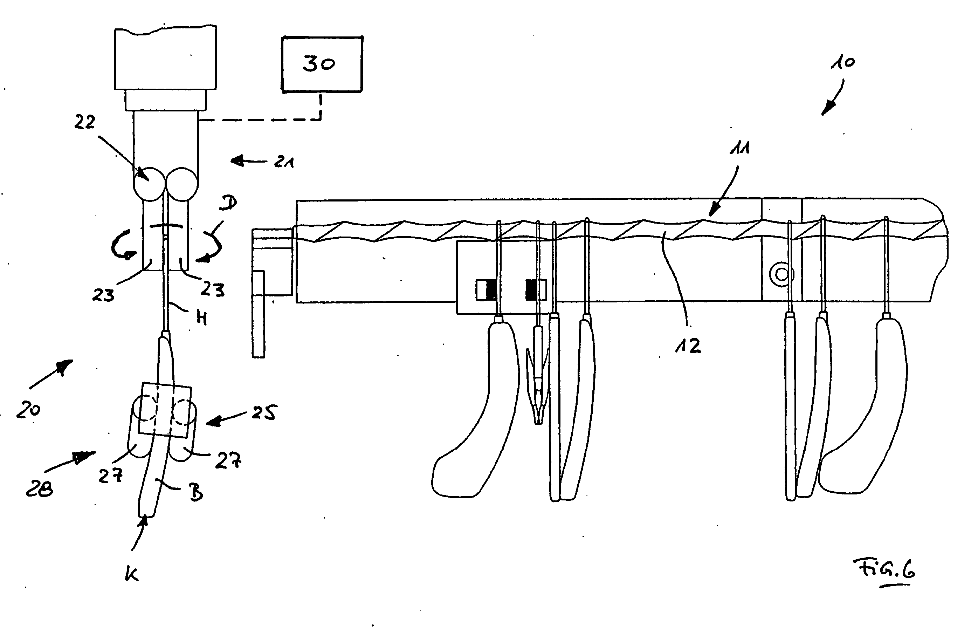

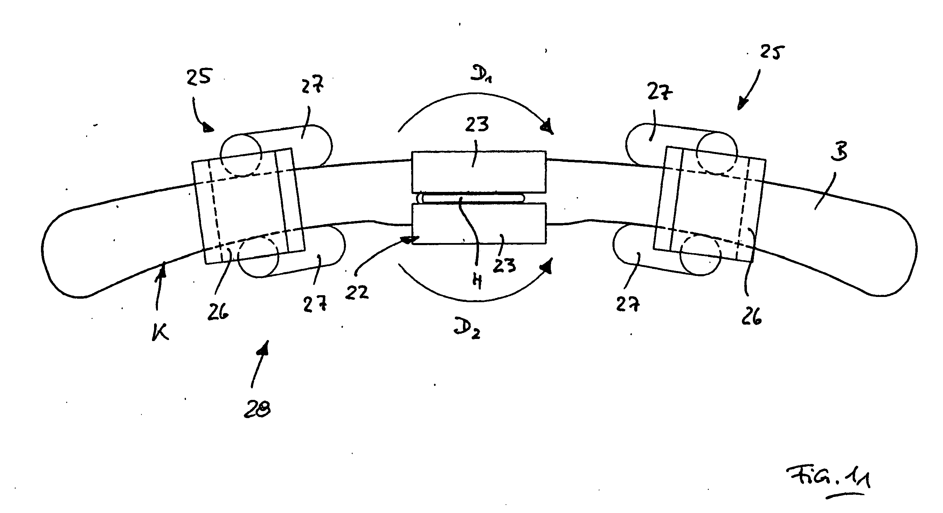

In diesem Zustand wird auf den Aufhängehaken H in beide Drehrichtungen ein vorbestimmtes Drehmoment aufgebracht, wie es in Figur 6 durch den Doppelpfeil D angedeutet ist. Der Drehantrieb 24 bringt zunächst das vorbestimmte Drehmoment in einer ersten Drehrichtung D1 (siehe Figur 11) über die Prüfklammer 22 auf den Aufhängehaken H auf, wobei der Kleiderbügel über die beiden Halteklammern 28 der Haltevorrichtung 25 am Bügelkörper B fest eingespannt ist. Anschließend wird über den Drehantrieb 24 ein vorbestimmtes Drehmoment in die andere Drehrichtung D2 aufgebracht.

Wenn die Befestigung des Aufhängehakens H in dem Bügelkörper B des Kleiderbügels K das Drehmoment aufnehmen kann, so dass außer elastischen Verformungen keine wesentliche Relativdrehung zwischen dem Bügelkörper B und dem Aufhängehaken H auftreten, wird der Kleiderbügel K von der Auswerte-Einheit 30 als wiederverwendbarer "Gutbügel" eingestuft. Ansonsten wird der Kleiderbügel K als "Schlechtbügel" klassifiziert.

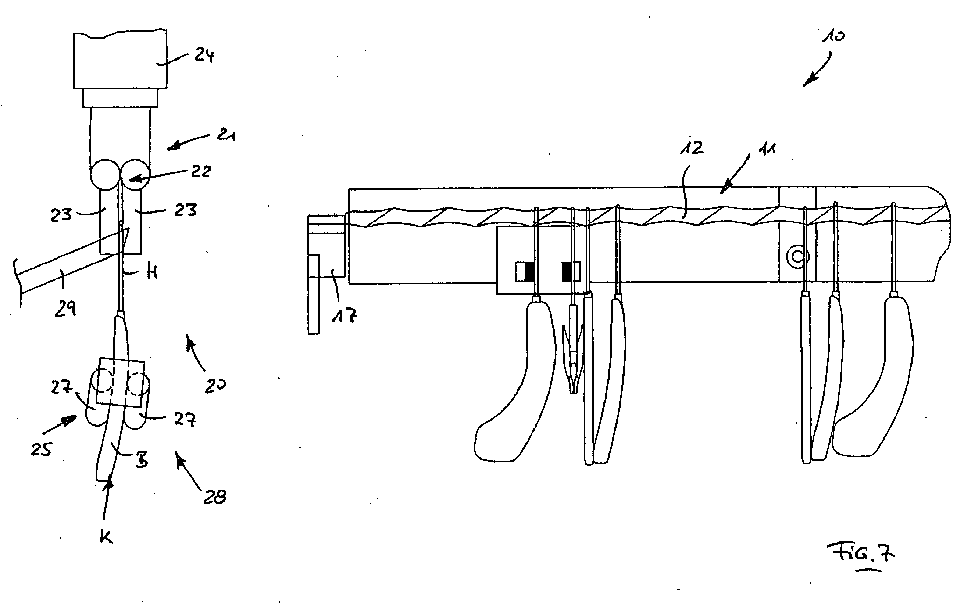

Nach Überprüfung der Drehfestigkeit des Aufhängehakens H fährt der Prüfkopf 21 mit der Haltevorrichtung 25 und dem fixierten Kleiderbügel K zu einer weiterführenden Transportvorrichtung 29 (s. Fig.7), auf die der Kleiderbügel K mit seinem Aufhängehaken H aufgehängt wird. Die weiterführende Transportvorrichtung 29 besitzt eine Weiche, die von der Auswerte-Einheit 30 angesteuert ist. Wenn der Kleiderbügel K als "Gutbügel" eingestuft ist, wird die Weiche so eingestellt, dass der Kleiderbügel K zu einer weiteren Arbeitsstation, beispielsweise einer Sortierstation oder einer Verpackungsstation befördert wird. Wenn der Kleiderbügel K als "Schlechtbügel" eingestuft ist, wird die Weiche so eingestellt, dass der Kleiderbügel aussortiert oder einer Aufarbeitungsstation oder einer Vernichtungsstation, beispielsweise einem Schredder zugeführt wird.

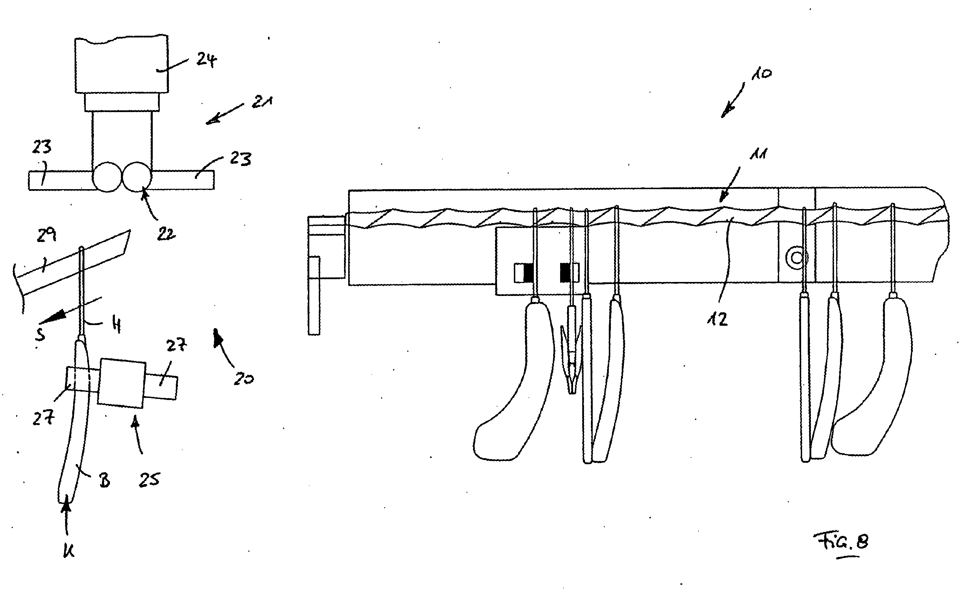

Nachdem der Kleiderbügel mit seinem Aufhängehaken H auf der weiterführenden Transportvorrichtung 29 korrekt positioniert ist und die Weiche entsprechend der Klassifizierung des Kleiderbügels eingestellt ist, werden sowohl die Prüfklammer 22 des Prüfkopfs 21 als auch die Halteklammern 28 der Haltevorrichtung 25 geöffnet, so dass der Kleiderbügel K freigegeben ist und entweder infolge Eigengewicht und/ oder durch motorischen Antrieb längs der weiterführenden Transportvorrichtung 29 transportiert wird (siehe Pfeil S in Figur 8). Damit ist die Überprüfung und Klassifizierung des Kleiderbügels hinsichtlich der Drehfestigkeit seines Aufhängehakens abgeschlossen.

## Patentansprüche

1. Drehmoment-Prüfvorrichtung (10) für einen Aufhängehaken (H) eines Kleiderbügels (K), mit einer Prüfstation (20), einer der Prüfstation (20) zugeordneten Haltevorrichtung (25), mittels der der Kleiderbügel (K) fixierbar ist, einen Prüfkopf (21), mit dem auf die Verbindung zwischen dem Aufhängehaken (H) und einem Bügelkörper (B) des Kleiderbügels (K) in zumindest einer Drehrichtung ein Drehmoment vorbestimmter Größe aufbringbar ist, und einer Auswerte-Einheit (30) zur Klassifizierung des Kleiderbügels (K) aufgrund der infolge des aufgebrachten Drehmoments erfolgten Bewegung zwischen dem Bügelkörper (B) und dem Aufhängehaken (H).

2. Drehmoment-Prüfvorrichtung nach Anspruch 1, **dadurch gekennzeichnet, dass** eine Fördervorrichtung (11) vorgesehen ist, mittels der der Kleiderbügel (K) der Prüfstation (20) zuführbar ist.

3. Drehmoment-Prüfvorrichtung nach Anspruch 2, **dadurch gekennzeichnet, dass** die Fördervorrichtung (11) eine Transport-Spindel (12) ist.

4. Drehmoment-Prüfvorrichtung nach einem der Ansprüche 1 bis 3, **dadurch gekennzeichnet, dass** der Prüfstation (20) eine Vereinzelungsstation (14) zur Vereinzelung der der Prüfstation (20) zugeführten Kleiderbügel (K) vorgelagert ist.

5. Drehmoment-Prüfvorrichtung nach Anspruch 4, **dadurch gekennzeichnet, dass** der Vereinzelungsstation (14) eine Vor-Vereinzelungsstation (13) vorgeschaltet ist.

6. Drehmoment-Prüfvorrichtung nach einem der Ansprüche 1 bis 5, **dadurch gekennzeichnet, dass** die Prüfstation (20) einen Hakenanschlag (17) aufweist, mit dem der Aufhängehaken (H) des zugeführten Kleiderbügels (K) in Anlage bringbar ist.

7. Drehmoment-Prüfvorrichtung nach Anspruch 6, **dadurch gekennzeichnet, dass** in den Hakenanschlag (17) zumindest ein Magnet (18) integriert ist, mit dem der Aufhängehaken (H) des Kleiderbügels (K) in Anlage bringbar ist.

8. Drehmoment-Prüfvorrichtung nach Anspruch 7, **dadurch gekennzeichnet, dass** zumindest zwei voneinander beabstandete Magnete (18) vorgesehen sind.

9. Drehmoment-Prüfvorrichtung nach einem der Ansprüche 6 bis 8, **dadurch gekennzeichnet, dass** dem Hakenanschlag (17) eine Sensorvorrichtung (31) zugeordnet ist, mittels der das Vorhandensein eines Kleiderbügels (K) erfassbar ist.

10. Drehmoment-Prüfvorrichtung nach Anspruch 9, **dadurch gekennzeichnet, dass** die Sensorvorrichtung (31) zumindest zwei Kontakte (32) eines Stromkreises umfasst, der mittels des Aufhängehakens (H) des Kleiderbügels (K) schließbar ist.

11. Drehmoment-Prüfvorrichtung nach Anspruch 10, **dadurch gekennzeichnet, dass** die Kontakte (32) in die Magnete (18) integriert sind.

12. Drehmoment-Prüfvorrichtung nach einem der Ansprüche 1 bis 11, **dadurch gekennzeichnet, dass** der Prüfkopf (21) eine Prüfklammer (22) umfasst, zwischen deren Klammerschenkeln (23) der Aufhängehaken (H) oder der Bügelkörper (B) einspannbar ist.

13. Drehmoment-Prüfvorrichtung nach einem der Ansprüche 1 bis 12, **dadurch gekennzeichnet, dass** der Prüfkopf (21) einen bidirektionalen Drehantrieb (24) aufweist.

14. Drehmoment-Prüfvorrichtung nach einem der Ansprüche 1 bis 13, **dadurch gekennzeichnet**, das die Haltevorrichtung (25) zumindest eine Halteklammer (28) umfasst, zwischen deren Halteschenkeln (27) der Kleiderbügel (K) einspannbar ist.

15. Drehmoment-Prüfvorrichtung nach Anspruch 14, **dadurch gekennzeichnet, dass** zumindest zwei Halteklammern (28) vorgesehen sind, die mit dem Bügelkörper (B) des Kleiderbügels (K) auf entgegengesetzten Seiten des Aufhängehakens (K) in Eingriff bringbar sind.

## Claims

1. A torque testing device (10) for a suspension hook (H) of a clothes hanger (K), with a testing station (20), a retaining device (25) assigned to the testing station (20), by means of which device the clothes hanger (K) may be fixed, a test head (21) with which a torque of predetermined value may be applied to the connection between the suspension hook (H) and a hanger body (B) of the clothes hanger (K) in at least one direction of rotation, and an evaluation unit (30) for classifying the clothes hanger (K) on the basis of the movement between the hanger body (B) and the suspension hook (H) performed as a result of the applied torque.

2. The torque testing device according to Claim 1, **characterised in that** a conveying device (11) is provided by means of which the clothes hanger (K) can be fed to the testing station (20).

3. The torque testing device according to Claim 2, **characterised in that** the conveying device 11) is a conveying spindle (12).

4. The torque testing device according to any one of Claims 1 to 3, **characterised in that** the testing station (20) is mounted before a separating station (14) for separating the clothes hangers (K) fed to the testing station (20).

5. The torque testing device according to Claim 4, **characterised in that** a pre-separation station (13) is installed upstream from the separating station (14).

6. The torque testing device according to any one of Claims 1 to 5, **characterised in that** the testing station (20) has a hook stop (17) with which the suspension hook (H) of the fed clothes hanger (K) can be brought into contact.

7. The torque testing device according to Claim 6, **characterised in that** at least one magnet 18, with which the suspension hook (H) of the clothes hanger (K) can be brought into contact, is integrated in the hook stop (17).

8. The torque testing device according to Claim 7, **characterised in that** at least two magnets (18) are provided, spaced apart.

9. The torque testing device according to any one of Claims 6 to 8, **characterised in that** a sensor device (31), by means of which the presence of a clothes hanger (K) can be detected, is assigned to the hook stop (17).

10. The torque testing device according to Claim 9, **characterised in that** the sensor device (31) comprises at least two contacts (32) of a circuit which is closable by means of the suspension hook (H) of the clothes hanger (K).

11. The torque testing device according to Claim 10, **characterised in that** the contacts (32) are integrated in the magnets (18).

12. The torque testing device according to any one of Claims 1 to 11, **characterised in that** the test head (21) comprises a test clamp (22) between whose clamping legs (23) the suspension hook (H) or the hanger body (B) can be clamped.

13. The torque testing device according to any one of Claims 1 to 12, **characterised in that** the test head (21) has a bidirectional rotary drive (24).

14. The torque testing device according to any one of Claims 1 to 13, **characterised in that** the retaining device (25) comprises at least one retaining clamp (28) between whose retaining legs (27) of the clothes hanger (K) can be clamped.

15. The torque testing device according to Claim 14, **characterised in that** at least two retaining clamps (28) are provided which can be brought into engagement with the hanger body (B) of the clothes hanger (K) on opposite sides of the suspension hook (K).

## Revendications

1. Dispositif d'essai par application d'un couple (10) pour un crochet de suspension (H) d'un cintre pour vêtements (K), avec une station de contrôle (20), un dispositif de maintien (25) associé à la station de contrôle (20) à l'aide duquel le cintre pour vêtements (K) peut être fixé, une tête de contrôle (21) avec laquelle un couple prédéfini peut être appliqué sur la jonction existant entre le crochet de suspension (H) et un corps de cintre (B) du cintre pour vêtements (K) dans au moins une direction de rotation ainsi qu'une unité d'analyse (30) pour classifier le cintre pour vêtements (K) sur la base du mouvement se produisant à la suite du couple appliqué entre le corps de cintre (B) et le crochet de suspension (H).

2. Dispositif d'essai par application d'un couple selon la revendication 1, **caractérisé en ce qu'**un dispositif de transport (11) est prévu à l'aide duquel le cintre pour vêtements (K) est amené à la station de contrôle (20).

3. Dispositif d'essai par application d'un couple selon la revendication 2, **caractérisé en ce que** le dispositif de transport (11) est un fuseau de transport (12).

4. Dispositif d'essai par application d'un couple selon l'une quelconque des revendications 1 à 3, **caractérisé en ce qu'**une station de dispersion (14) est disposée avant la station de contrôle (20) pour disperser les cintres pour vêtements (K) amenés à la station de contrôle (20).

5. Dispositif d'essai par application d'un couple selon la revendication 4, **caractérisé en ce qu'**une station de prédispersion (13) est connectée en amont de la station de dispersion (14).

6. Dispositif d'essai par application d'un couple selon l'une quelconque des revendications 1 à 5, **caractérisé en ce que** la station de contrôle (20) comporte une butée de crochet (17) avec laquelle le crochet de suspension (H) du cintre pour vêtements (K) introduit peut être amené dans l'installation.

7. Dispositif d'essai par application d'un couple selon la revendication 6, **caractérisé en ce qu'**au moins un aimant (18) est intégré dans la butée de crochet (17) avec lequel le crochet de suspension (H) du cintre pour vêtements (K) peut être amené dans l'installation.

8. Dispositif d'essai par application d'un couple selon la revendication 7, **caractérisé en ce qu'**au moins deux aimants (18) écartés l'un par rapport à l'autre sont prévus.

9. Dispositif d'essai par application d'un couple selon l'une quelconque des revendications 6 à 8, **caractérisé en ce qu'**un dispositif de détection (31) est associé à la butée de crochet (17), à l'aide duquel la présence d'un cintre pour vêtements (K) peut être détectée.

10. Dispositif d'essai par application d'un couple selon la revendication 9, **caractérisé en ce que** le dispositif de détection (31) comprend au moins deux contacts (32) d'un circuit électrique pouvant être fermé à l'aide du crochet de suspension (H) du cintre pour vêtements (K).

11. Dispositif d'essai par application d'un couple selon la revendication 10, **caractérisé en ce que** les contacts (32) sont intégrés dans les aimants (18).

12. Dispositif d'essai par application d'un couple selon l'une quelconque des revendications 1 à 11, **caractérisé en ce que** la tête de contrôle (21) comprend une pince de contrôle (22) entre les côtés de pince (23) desquels le crochet de suspension (H) ou le corps de cintre (B) peut être serré.

13. Dispositif d'essai par application d'un couple selon l'une quelconque des revendications 1 à 12, **caractérisé en ce que** la tête de contrôle (21) comporte un entraînement de rotation bidirectionnel (24).

14. Dispositif d'essai par application d'un couple selon l'une quelconque des revendications 1 à 13, **caractérisé en ce que** le dispositif de maintien (25) comprend au moins une pince de maintien (28) entre les côtés de maintien (27) desquels le cintre pour vêtements (K) peut être serré.

15. Dispositif d'essai par application d'un couple selon la revendication 14, **caractérisé en ce qu'**au moins deux pinces de maintien (28) sont prévues pouvant être mises en prise avec le corps de cintre (B) du cintre pour vêtements (K) sur les côtés opposés du crochet de suspension (K).
